# EUROPEAN PATENT SPECIFICATION

(11) **EP 4 493 488 B1**
(45) Date of publication and mention of the grant of the patent: **23.09.2026**
(21) Application number: 23711460.8
(22) Date of filing: 15.03.2023
(51) Int. Cl.: B65D 83/20, B29C 45/26, B65D 83/40

(54) **AEROSOL CAP WITH RUPTURE LINE**
AEROSOLKAPPE MIT BRUCHLINIE
CAPUCHON D'AÉROSOL AVEC LIGNE DE RUPTURE

(30) Priority: 18.03.2022 NL 2031334
(43) Date of publication of application: 22.01.2025
(73) Proprietor: Silgan Dispensing Systems Group B.V., 6716 AA Ede (NL)
(72) Inventor: NUIJEN, Henricus Johannes Cornelius, 5048 AN Tilburg (NL); SCHOOFS, Jolijn Marion, 5555 LB Valkenswaard (NL)
(74) Representative: EP&C
(86) International application number: PCT/EP2023/056547
(87) International publication number: WO 2023/174973

(56) References cited:
- EP-A1- 2 910 491
- JP-A- 2003 192 060
- JP-A- H0 429 816
- JP-A- H09 301 455
- JP-A- H09 301 459
- JP-A- H09 301 463
- JP-A- H1 017 044
- JP-B2- 3 709 015
- US-A- 6 006 957

## Description

The invention relates to an aerosol cap for placement on an aerosol container having a valve stem of an operable valve at the top of the container, the aerosol cap being made of a plastic material by injection moulding. The aerosol cap comprises a cap body having a circumferential wall and having an open bottom end to be placed on and connected with the aerosol container. The aerosol cap furthermore comprises an actuator including a dispensing opening and a tubular member, which tubular member is adapted to be coupled with the valve stem of the aerosol container and defines a flow channel between the valve stem and the dispensing opening. The actuator is adapted to operate the valve stem. The aerosol cap also comprises a push button associated with the actuator. A hinge portion integrally connects the push button with the cap body. The hinge portion defines a hinge axis. The hinge portion may for example connect a front side of the push button or a rear side of the push button with the cap body.

An aerosol container is usually made of metal, e.g. aluminium. The aerosol cap is made of another material, usually plastic. After the aerosol container is empty most of the containers in the market are disposed of in an assembled state. The assembly of the aerosol container and the aerosol cap is usually difficult to disassemble for an average consumer, and therefore the metal and plastic components are disposed in the same waste stream. As the container is the major part of the assembly, the assembly will get in the same waste stream as the container. In this waste stream the plastic parts are often incinerated. As recycling of materials, in particular also plastic materials, becomes more and more a topic these days, the unseparated discarding of the assembly is undesirable.

Spray can assemblies wherein the plastic aerosol cap can be ruptured to be removed from the aerosol container are known. For example JPH09301463 (Ayoama Naoyuki) discloses a plastic aerosol cap having a pair of parallel scoring lines through the circumferential wall towards the bottom end of the closure body. The actuator has a dispensing spout which extends coaxial with the valve stem of the aerosol. When the aerosol is empty and can be disposed of, the user can use the spout as a lever and pull it towards the hinge, whereby the scoring lines rupture and a strip of material between them is entirely separated from the circumferential wall. Thereby the circumferential wall can be removed from the aerosol container. JPH09301455 (Shiseido Co. Itd.) discloses a similar structure with a dispensing spout, but this document shows an embodiment having a pair of scoring lines which do not extend all the way through the circumferential wall toward the bottom edge of the cap body, thereby loosening the attachment which makes the disassembly of the cap and the container still somewhat cumbersome for the average consumer, which then out of convenience may be tempted to throw the assembly away in a non-separated state. JPH09301459 (Kamaya Kagaku Kogyo Co. Itd.) discloses a similar aerosol cap having a dispensing spout and a pair of weakening lines in the circumferential wall of the aerosol cap. This document also discloses an aerosol cap having a single symmetrically arranged weakening line having an rupture initiating notch at the bottom end of the cap. JP2003192060A discloses rupture lines formed in the dispensing cap, which enable the cap to be easily torn and separated from the container body after use, thereby facilitating safe disposal and material separation of the synthetic resin cap and the metal container.

The invention has for an object to provide a fully rupturable aerosol cap which does not produce separate pieces when ruptured.

This object is achieved by an aerosol cap according claim 1.

The aerosol cap according to the invention is typically made in an injection moulding process. Plastic materials used for making the aerosol cap may be Polyethylene (PE) and Polypropylene (PP), but also other thermoplastic resins are feasible. The plastic material is molten and enters a mold cavity through an injection gate. The mould cavity defines the shape of the aerosol cap and is gradually filled via the gate. According to the invention the injection gate is positioned in the centre plane of the hinge portion of the cap. The circumferential wall of the cap body has one single rupture line which extends from a top end of the cap body towards a bottom end of the cap body. The rupture line is at least partially offset from the centre plane of the hinge portion. The effect of this is that the flow of molten plastic will initially run from the centre plane and will flow along one side of the formation that forms the rupture line, which is offset from the centre line. The flow direction is initially parallel with the direction of the rupture line. This has an advantageous effect on controlling and guiding the direction of rupturing. The material next to the rupturing line which had a flow direction along the rupturing line has a lower tendency to tear in a direction transverse to the original flow direction, whereby random rupturing of the cap body is prevented and whereby the formation of separate pieces is prevented. Only after the counter pressure increases due to further filling of the mould cavity, the molten plastic will flow transversely over the formation that forms the rupture line. The orientation of the fibers at the rupure line will thus be transverse to the intended rupture direction, which has the effect that at the rupture line the material will break easier. Furthermore the rupture line will have less material, whereby the tearing resistance is reduced in said predetermined area. The lower tearing resistance at the rupture line will guide the rupturing direction.

In a preferred embodiment the injection gate is located at the push button. The effect of this is that the flow of molten plastic will initially run from the button and will fill the hinge portion. At the hinge the material will be evenly ditributed and flow along one side of the formation that forms the rupture line.

A preferred embodiment of the aerosol cap allows that the push button is swiveled about the hinge axis and the user may grab the push button in the way of a pulling tab and manipulate the pulling tab thereby causing the circumferential wall to rupture along the rupture line.

In a possible embodiment the hinge portion will connect a front side of the push button (i.e. the side corresponding to the side where the dispensing opening or nozzle may be located), In such an embodiment the push-button will be swivelled about the hinge axis to the front.

In a preferred embodiment the rupture line extends from a location adjacent the hinge portion towards the edge of the circumferential wall at the bottom end. The pulling force is directly lead into the rupture line at the hinge portion and initiates the rupture process.

In a possible embodiment the rupture line has a rupture initiator notch at the top end. The initiator notch lowers the force necessary to start the initial rupturing of the rupturing line. At the beginning the push button/pulling tab is near the rupturing zone and there is not much leverage, whereby the user has to apply a higher force than when the rupture has developed towards the bottom. It is advantageous to have a rupture initiator notch to lower the force necessary to initiate the rupturing.

The aerosol cap may be (to a large extent) symmetrical with respect to the centre plane of the hinge portion, except for the single rupturing line. The push button is thus also symmetrically arranged but the rupturing movement is asymmetrical. Thereby the user will tordate the push button/pulling tab.

In a possible embodiment the rupture line may have a curved shape. This makes the asymmetric rupturing easier.

In a further embodiment the end of the rupture line at the bottom end is in or near the centre plane. By this shape of the rupture line the rupturing force and the direction of the rupturing line are substantially corresponding, which mitigates the risk of transversely tearing in of the circumferential wall away from the rupturing line.

In a possible embodiment the rupture line is adapted to have a smaller tearing resistance at the top end than at the bottom end. At the beginning the push button/pulling tab is near the rupturing zone and there is not much leverage, whereby the user has to apply a higher force than when the rupture has developed towards the bottom. By increasing the tearing resistance towards the bottom, the cap is stronger at the bottom and is therefor better suited to be demoulded and placed on the aerosol container without rupturing at the rupture line. The increased tearing resistance is in use compensated because this area is a longer distance away from the push button/pull tab and the user thus has a higher leverage for the force he applies at the push button/pull tab.

In a possible embodiment the rupture line comprises perforations.

In a further embodiment the perforations have an oval shape with a long axis of the oval shape aligned with the rupture line. By pulling on the push button/pull tab the plastic material is stretched at the rupturing line, whereby the material is reinforced and resistance to rupture increases. The perforations interrupt this stretching process, whereby the tearing force is better controlled during rupturing.

In a possible embodiment the rupture line is only partially perforated. The portion near the bottom end is possibly not perforated, so as to reduce the risk that the cap will rupture there when being demoulded or placed on the container. The lower end may be provided with indentations instead of perforations.

In another embodiment the rupture line comprises a groove. The groove may be formed on the outer side of the circumferential wall, but may also be formed on the inner side of the circumferential wall. The latter has the advantage that the outer side maintains a smooth appearance.

In a possible embodiment, on either side of the rupture line an axial rib extends in a direction from the top end to the bottom end along the inner side of the circumferential wall. The axial ribs may be spaced apart from the rupturing line but reinforce the area between them and protect the area between them against high stress in the circumferential direction during demoulding or placing the cap on the container. The weakened area of the rupture line is thus better protected against undesired rupturing during manufacturing or assembly with a container. This aspect of the invention can also be applied independently as is claimed in independent claim 19.

In a possible embodiment axial ribs are formed on the inner side of the circumferential wall, distributed over the circumference, wherein said ribs extend in axial direction of the cap body, wherein the bottom end of the ribs is spaced apart from the bottom end of the circumferential wall. The lower end of the ribs forms a stop which rests on a rim of the aerosol container.

Another aspect of the invention relates to an aerosol cap according to claim 13.

According to this aspect an axial rib is formed on the inner side of the circumferential wall directly next to the groove. The axial rib next to the rupture line guides and controls the rupturing process and prevents that the circumferential wall starts to tear randomly in different directions due to the twist and pull action on the push button when the consumer is tearing the cap body from the container. The axial rib which is located directly next to the rupture line maintains the rupture progress on the rupture line.

Yet anopther aspect of the invention relates to the subject matter of claim 14.

According to this aspect the gate is located in the push button. The effect of this is that the flow of molten plastic will initially run from the button and will fill the hinge and will then run from the hinge along one side of the formation that forms the rupture line. The flow direction is thus initially parallel with the direction of the rupture line. This has an advantageous effect on controlling and guiding the direction of rupturing. The material next to the rupturing line which had a flow direction along the rupturing line has a lower tendency to tear in a direction transverse to the original flow direction, whereby random rupturing of the cap body is prevented and whereby the formation of separate pieces is prevented. Only after the counter pressure increases due to further filling of the mould cavity, the molten plastic will flow transversely over the formation that forms the rupture line. The orientation of the fibers at the rupure line will thus be transverse to the intended rupture direction, which has the effect that at the rupture line the material will break easier. Furthermore the rupture line will have less material, whereby the tearing resistance is reduced in said predetermined area. The lower tearing resistance at the rupture line will guide the rupturing direction.

Also disclosed is an injection mould for manufacturing a plastic cap adapted to be snap connected to a container, the injection mould comprising a moulding cavity defining the cap and comprising a gate to fill the cavity with a molten plastic resin, wherein the mould comprises one rupture line defining formation, which defines a rupture line to be formed in the cap, said rupture line allowing the cap to be ruptured and removed from the container, wherein the gate is located with respect to the rupture line forming formation in such a way that upon filling of the moulding cavity through the gate, a filling flow of molten plastic resin flows substantially parallel with the direction of the rupture line along one side of the rupture line.

Also disclosed is a method for manufacturing an aerosol cap according to claim 1using an injection mould as described in the above.

The invention also relates to an assembly of an aerosol container and an aerosol cap as described in the above.

It is noted that different aspects of the invention may be combined.

The invention will be further elucidated in the following description with reference to the drawings, in which:
Fig. 1 shows a view in perspective from the front of an embodiment of an aerosol cap according to the invention,
Fig. 2 shows a top elevational view of the aerosol cap of Fig. 1,
Fig. 3 shows a front view of the aerosol cap of Fig. 1,
Fig. 4 shows a view in perspective from below of the aerosol cap of Fig. 1,
Fig. 5 shows a view in perspective from the front of a ruptured aerosol cap of Fig. 1,
Fig. 6 shows a front view of another embodiment of an aerosol cap according to the invention,
Fig. 7 shows a view in perspective from below of the aerosol cap of Fig. 6,
Fig. 8 shows a top elevational view of the aerosol cap of Fig. 6, and
Fig. 9 shows schematically a top of an aerosol container assembled with an aersol cap of Fig. 1 or Fig. 6.

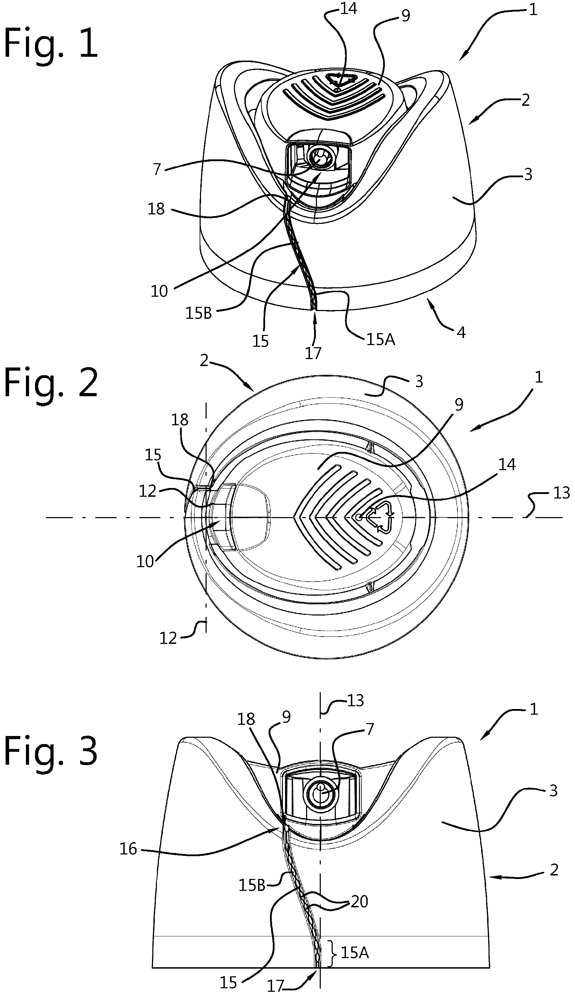

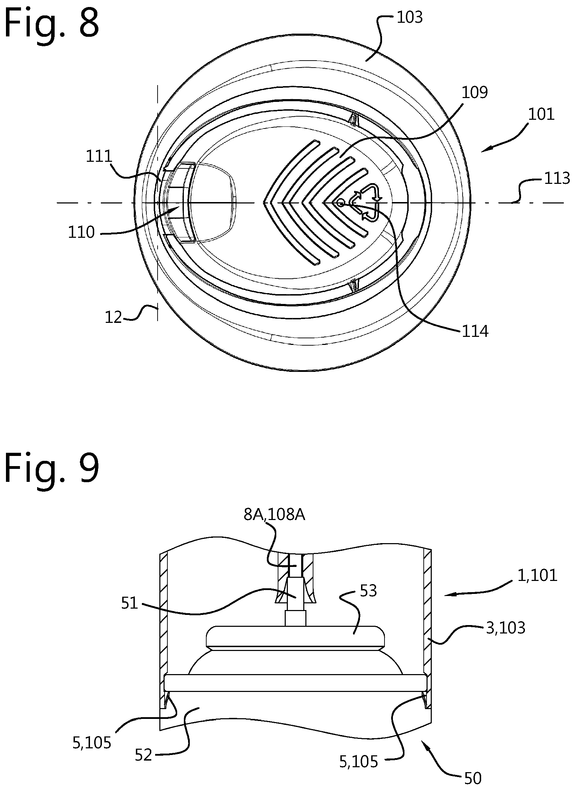

Figs. 1-4 shows an aerosol cap 1. The aerosol cap 1 is made of a plastic material, such as Polyethelene (PE) or Polypropylene (PP). The aerosol cap 1 is adapted to be placed on an aerosol container 50 having a valve stem 51 of an operable valve at the top of the container (see Fig. 9).

Such an aerosol container typically is a substantially cylindrical metal can 52 having an opening at a top end which is sealed by a valve cup 53. The valve cup 53 is attached to the container by a crimping connection. The valve cup 53 holds a valve assembly which includes a valve stem 51. The aerosol container may be an aerosol container that contain a product, e.g. a fluid, to be dispensed and a propellant gas mixed with the product to expel the product out of the container when the valve of the valve assembly is opened. Also other types of aerosol containers are possible, for example bag-on-valve type containers, in which the product to be dispensed, e.g. a fluid, is contained in a bag, which is arranged inside the container. The container around the bag is pressurized with compressed gas, e.g. air or nitrogen as propellant. The valve stem 51 is able to operate the valve when it is pushed in or sideways, such that the valve opens and the product, e.g. a fluid, is expelled from the container by a propellant gas. The valve stem 51 is a tubular member through which the fluid will flow. The valve stem may be the valve stem 51 of a so called male valve (cf. Fig. 9), as well as of a female valve, which types are both known to the person skilled in the art. The valve stem will in many applications be connected to a spray nozzle which forms the flowing fluid into a spray. The spray nozzle is often comprised in an aerosol spray cap.

It is noted that the material of the container is not material to the present invention and may also be made of another suitable material instead of metal, e.g. a suitable plastic material.

The aerosol cap 1 comprises a cap body 2 having a circumferential wall 3 and having an open bottom end 4 to be placed on and connected with the aerosol container. To this end there are locking ridges 5 or beads formed on the inner side of the circumferential wall 3 near the bottom end 4. The locking ridges 5 extend in the circumferential direction and are adapted to cooperate with a ridge of the aerosol container (cf. Fig. 9).

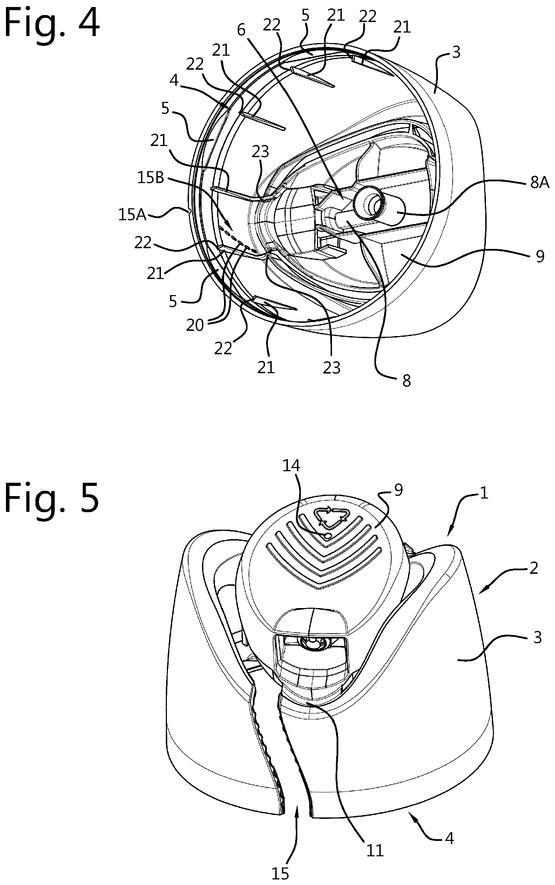

The aerosol cap 1 furthermore comprises an actuator 6 including a dispensing opening or dispensing nozzle 7 and a tubular member 8. The tubular member 8 is adapted to be coupled with the valve stem of the aerosol container by a tube portion 8A (cf. Fig. 4 and 9). The tubular member 8 defines a flow channel between the valve stem 51 and the dispensing nozzle 7. The actuator is 6 adapted to operate the valve stem 51.

A push button 9 is formed integrally with the actuator 6. The push button 9 has a front side 10. A hinge portion 11 integrally connects the front side 10 of the push button 9 with the cap body 2. The hinge portion 11 defines a hinge axis 12 indicated by a dash-dotted line in Fig. 2.

The hinge portion 11 of the aerosol cap 1 has a centre plane 13, indicated by a dashed line in Figs. 2 and 3, which extends perpendicularly through the hinge axis 12. The aerosol cap 1 has an injection gate 14 in the push button 9. The injection gate 14 is located in the centre plane 13 as is shown in Fig. 2.

The circumferential wall 3 of the cap body 2 has one rupture line 15 which extends from a top end 16 of the cap body 2 towards the bottom end 4 of the cap body 2. The rupture line 15 is at least partially offset from the centre plane 13. In particular the rupture line 15 extends from a location adjacent the hinge portion 11 towards the edge of the circumferential wall 3 at the bottom end 4. In the embodiment shown in Fig. 1 and 3, the rupture line 15 has a curved shape (S-curve) and the end 17 of the rupture line 15 at the bottom end 4 is located in the centre plane 13. The rupture line 15 has a rupture initiator notch 18 at the top end. This shape of the rupture line 15 causes the rupture force applied by the consumer to be congruent with the actual direction of the rupture line as rupturing progresses towards the bottom. This mitigates the risk that the circumferential will undesirably rupture away from the rupture line 15.

The rupture line 15 comprises perforations 20 as can be best seen in Figs. 3 and 4. The perforations 20 have an oval shape with a long axis of the oval shape aligned with the rupture line 15. The part 15B of the rupture line 15 from the initiator notch 18 to a distance from the lower edge is provided with through perforations. The portion 15A of the rupture line 15 near the bottom end 4 is not fully perforated, but has indentations instead of perforation holes as is visible in Fig. 4. The portion 15A has thus a higher resistance to rupturing, which reduces the risk that the cap 1 will rupture there when being demoulded or snapped on the container with the locking ridges 5. The perforations 20 have the effect that the rupturing takes place in discrete steps which guides and controls the direction of rupturing compared to a continuous rupture line. This counters the tendency of the material to rupture randomly outside the rupture line due to the twisting and pulling of the push button 9. The discrete steps direct the pull forces to the bridging portions between the perforations 20 and provide a well controlled rupturing process.

Axial ribs 21 are formed on the inner side of the circumferential wall 3, distributed over the circumference. The ribs 21 extend in axial direction of the cap body 2, wherein the bottom end 22 of the ribs 21 is spaced apart from the bottom end 4 of the circumferential wall 3 as is visible in Fig. 4. The ends 22 of the ribs 21 form a stop which engages a rim of the aerosol container. As is visible in Fig. 4 the rupture line 15 is located between two ribs 21 at the front side of the cap body 2. The axial ribs 21 reinforce the area between them and protect the area between them against high stress in the circumferential direction during demoulding or placing the cap 1 on the container. The weakened area of the rupture line 15 is thus better protected against undesired rupturing during manufacturing or assembly with a container.

The two axial ribs 21 at the front have an upper portion 23 which extends transversely to the axial rib 21 inwardly along the hinge portion 11. These rib upper portions 23 reinforce the hinge 11 and prevent the hinge 11 from tearing when the push button 9 is used as a pull tab and twisted and pulled by the user to rupture the cap body 2 at the rupture line 15.

The aerosol cap 1 is made from a suitable plastic such as PE or PP by an injection moulding process. The injection mould for manufacturing the plastic cap 1 comprises a moulding cavity defining the cap and comprising a gate to fill the cavity with a molten plastic resin, wherein the mould comprises one rupture line defining formation, which defines the rupture line 15 to be formed in the cap. The gate 14 is located at the push button 9 in the centre plane 13. The flow of molten plastic entering the mould cavity through the gate first fills the cavity portion forming the push button 9. Then the flow of molten plastic will flow through the cavity portion that forms the hinge 11. The flow of molten plastic then flows substantially parallel with the direction of the rupture line 15 along one side of the rupture line 15. Only after the flow has filled a part of the circumferential wall 3 in a direction away from the rupture line 15, the pressure in the flow will increase to such a degree that the the molten plastic will eventually cross the rupture line forming formation in the mould cavity. By this transverse direction of the molten flow, the fibers of the thermoplastic material will be oriented in the circumferential direction at the rupture line and transverse to the rupture line. This has the effect that the material will be more easy to break.

In use the consumer can separate the aerosol cap 1 from the aerosol container by pulling the rear end of the push button 9 up. Thereby the push button 9 is tilted over the hinge axis 12 and can be grabbed as a pull tab. Next, by pulling and twisting the push button 9 the rupture line 15 is ruptured until the rupture line is entirely ruptured towards the bottom end 4 of the cap body 2. The state in which the rupture line 15 is entirely ruptured is shown in Fig. 5. In this state the cap body 2 can be disengaged from the aerosol container. The plastic cap 1 can be disposed in a plastics recycling stream. The aerosol container can be disposed in another recycling waste stream.

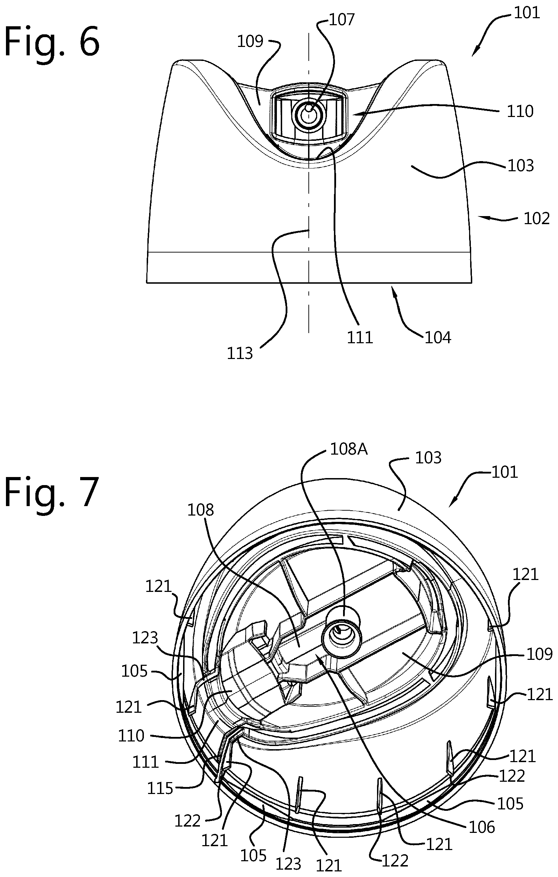

In Figs 6-8 another aerosol cap 101 is shown. The aerosol cap 101 is made of a plastic material, such as Polyethelene (PE) or Polypropylene (PP).

The aerosol cap 101 comprises a cap body 102 having a circumferential wall 103 and having an open bottom end 104 to be placed on and connected with the aerosol container. To this end there are locking ridges 105 or beads formed on the inner side of the circumferential wall 103 near the bottom end 104. The locking ridges 105 extend in the circumferential direction and are adapted to cooperate with a ridge of the aerosol container.

The aerosol cap 101 furthermore comprises an actuator 106 including a dispensing opening or dispensing nozzle 107 and a tubular member 108. The tubular member 108 is adapted to be coupled with the valve stem 51 of the aerosol container by a tube portion 108A (cf. Fig. 7 and 9). The tubular member 108 defines a flow channel between the valve stem 51 and the dispensing nozzle 107. The actuator is 106 adapted to operate the valve stem 51.

A push button 109 is formed integrally with the actuator 106. The push button 109 has a front side 110. A hinge portion 111 integrally connects the front side 110 of the push button 109 with the cap body 102. The hinge portion 111 defines a hinge axis 112 indicated by a dash-dotted line in Fig. 8.

The hinge portion 111 of the aerosol cap 101 has a centre plane 113, indicated by a dashed line in Fig. 6 and 8, which extends perpendicularly through the hinge axis 112. The aerosol cap 101 has an injection gate 114 (see Fig. 8) in the push button 109 in the centre plane 113.

Axial ribs 121 are formed on the inner side of the circumferential wall 103, distributed over the circumference. The ribs 121 extend in axial direction of the cap body 102, wherein the bottom end 122 of the ribs 121 is spaced apart from the bottom end 104 of the circumferential wall 103 as is visible in Fig. 7. The ends 122 of the ribs 121 form a stop which engages a rim of the aerosol container.

As is visbile in Fig. 7 a rupture line 115 is located next to one of the ribs 121 at the front side of the cap body 102. The rupture line 115 is a groove formed on the inner side of the circumferential wall 103. As can be seen in Fig. 6 the groove is not visible on the outside of the circumferential wall 103, whereby the cap 101 has a smooth outer appearance.

The axial rib 121 at the front end reinforces the area next to the rupture line against high stress in the circumferential direction during demoulding or placing the cap 101 on the container. The weakened area of the rupture line 115 is thus better protected against undesired rupturing during manufacturing or assembly with a container. In use the consumer can separate the aerosol cap 101 from the aerosol container by lifting the rear end of the push button 109 upwardly. Thereby the push button 109 is tilted over the hinge axis 112 and can be grabbed as a pull tab. Next, by pulling and twisting the push button 109 the rupture line 115 is ruptured until the rupture line 115 is entirely ruptured towards the bottom end 104 of the cap body 102. The axial rib 121 next to the rupture line 115 guides and controls the rupturing process and prevents that the circumferential wall 103 starts to rupture randomly in different directions due to the twist and pull action on the push button 109. The rib 121 next to the rupture line 115 maintains the rupture progress on the rupture line 115.

The two axial ribs 121 at the front have an upper portion 123 which extends transversely to the axial rib 121 inwardly along the hinge portion 111. These rib upper portions 123 reinforce the hinge and prevent the hinge from tearing when the push button 109 is used as a pull tab and twisted and pulled by the user to rupture the cap body 102 at the rupture line 115.

The aerosol cap 101 is made from a suitable plastic such as PE or PP by an injection moulding process. The injection mould for manufacturing the plastic cap 101 comprises a moulding cavity defining the cap and comprising a gate to fill the cavity with a molten plastic resin, wherein the mould comprises one rupture line defining formation, which defines the rupture line 115 to be formed in the cap. The gate 114 is located at the push button, preferably but not necessarily in the centre plane 113. The flow of molten plastic entering the mould cavity through the gate first fills the cavity portion forming the push button 109. Then the flow of molten plastic will flow through the cavity portion that forms the hinge 111. The flow of molten plastic then flows substantially parallel with the direction of the rupture line 115 along one side of the rupture line 115. Only after the flow has filled a part of the circumferential wall 103 in a direction away from the rupture line 115, the pressure in the flow will be increased to such a degree that the the molten plastic will eventually cross the rupture line forming formation in the mould cavity. Also in this embodiment, the fibers of the thermoplastic material will be oriented in the circumferential direction at the rupture line and transverse to the rupture line. This has the effect that the material will be more easy to break.

## Claims

1. Aerosol cap (1, 101) for placement on an aerosol container (50) having a valve stem (51) of an operable valve at the top of the container (50), the aerosol cap (1, 101) being made of a plastic material by injection moulding, the aerosol cap (1, 101) comprising:
- a cap body (2, 102) having a circumferential wall (3, 103) and having an open bottom end (4, 104) to be placed on and connected with the aerosol container (50),
- an actuator (6, 106) including a dispensing opening or nozzle (7, 107) and a tubular member (8, 108), which tubular member (8, 108) is adapted to be coupled with the valve stem (51) of the aerosol container (50) and defines a flow channel between the valve stem (51) and the dispensing opening or nozzle (7, 107), the actuator (6, 106) being adapted to operate the valve stem (51),
- a push button (9, 109) associated with the actuator (6, 106), wherein a hinge portion (11, 111) integrally connects the push button (9, 109) with the cap body (2, 102), said hinge portion (11, 111) defining a hinge axis (12, 112),
wherein the hinge portion (11, 111) has a centre plane (13, 113) extending perpendicularly through the centre of the hinge axis (12, 112), wherein the aerosol cap (1, 101) has an injection gate (14, 114) in the centre plane (13, 113), and
wherein the circumferential wall (3, 103) of the cap body (2, 102) has one single rupture line (15, 115), wherein said rupture line (15, 115) extends from a top end (16, 116) of the cap body (2, 102) towards a bottom end (4, 104) of the cap body (2, 102), wherein said rupture line (15, 115) is at least partially offset from the centre plane (13, 113).

2. Aerosol cap (1, 101) according to claim 1, wherein the injection gate (14, 114) is located in the push button (9, 109).

3. Aerosol cap (1, 101) according to claim 1 or 2, wherein the rupture line (15, 115) extends from a location adjacent the hinge portion (11, 111) towards the edge of the circumferential wall (3, 103) at the bottom end.

4. Aerosol cap according to claim 3, wherein the end of the rupture line (15, 115) at the bottom end (4, 104) is in or near the centre plane (13, 113).

5. Aerosol cap (1, 101) according to any of the preceding claims,
wherein the rupture line (15, 115) has a curved shape; and/or
wherein the rupture line (15, 115) has a rupture initiator notch (18) at the top end (16, 116); and/or
wherein the rupture line (15, 115) is adapted to have a smaller tearing resistance at the top end (16, 116) than at the bottom end (4, 104).

6. Aerosol cap (1, 101) according to any of the preceding claims, wherein the rupture line (15, 115) comprises perforations (20),
wherein optionally the perforations (20) have an oval shape with a long axis of the oval shape aligned with the rupture line (15, 115),
wherein optionally the rupture line (15, 115) is only partially perforated.

7. Aerosol cap (1, 101) according to any of the preceding claims, wherein the rupture line (15, 115) comprises a groove.

8. Aerosol cap (1, 101) according to claim 7, wherein the groove is formed on the outer side of the circumferential wall (3, 103).

9. Aerosol cap (1, 101) according to claim 7, wherein the groove is formed on the inner side of the circumferential wall (3, 103).

10. Aerosol cap according to claim 9, wherein directly next to the groove an axial rib (21, 121) is formed on the inner side of the circumferential wall (3, 103).

11. Aerosol cap (1, 101) according to any of the preceding claims, wherein on either side of the rupture line (15, 115) an axial rib (21, 121) extends in a direction from the top end (16, 116) to the bottom end (4, 104) along the inner side of the circumferential wall (3, 103).

12. Aerosol cap (1, 101) according to any of the preceding claims, wherein axial ribs (21, 121) are formed on the inner side of the circumferential wall (3, 103), distributed over the circumference, wherein said ribs (21, 121) extend in axial direction of the cap body (2, 102), wherein the bottom end of the ribs (21, 121) is spaced apart from the bottom end (4, 104) of the circumferential wall (3, 103).

13. Aerosol cap (1, 101) for placement on an aerosol container (50) having a valve stem (51) of an operable valve at the top of the container (50), the aerosol cap (1, 101) being made of a plastic material, in particular PP or PE, by injection moulding, the aerosol cap (1, 101) comprising:
- a cap body (2, 102) having a circumferential wall (3, 103) and having an open bottom end (4, 104) to be placed on and connected with the aerosol container (50),
- an actuator (6, 106) including a dispensing opening or nozzle (7, 107) and a tubular member (8, 108), which tubular member (8, 108) is adapted to be coupled with the valve stem (51) of the aerosol container (50) and defines a flow channel between the valve stem (51) and the dispensing opening or nozzle (7, 107), the actuator (6, 106) being adapted to operate the valve stem (51),
- a push button (9, 109) associated with the actuator (6, 106), wherein a hinge portion (11, 111) integrally connects the push button (9, 109) with the cap body (2, 102), said hinge portion (11, 111) defining a hinge axis (12, 112),
wherein the circumferential wall (3, 103) of the cap body (2, 102) has one single rupture line (15, 115), wherein said rupture line (15, 115) extends from a top end (16, 116) of the cap body (2, 102) towards a bottom end (4, 104) of the cap body (2, 102),
wherein on either side of the rupture line (15, 115) an axial rib (21, 121) extends in a direction from the top end (16, 116) to the bottom end (4, 104) along the inner side of the circumferential wall (3, 103).

14. Aerosol cap (1, 101) for placement on an aerosol container (50) having a valve stem (51) of an operable valve at the top of the container (50), the aerosol cap (1, 101) being made of a plastic material by injection moulding, the aerosol cap (1, 101) comprising:
- a cap body (2, 102) having a circumferential wall (3, 103) and having an open bottom end (4, 104) to be placed on and connected with the aerosol container (50),
- an actuator (6, 106) including a dispensing opening or nozzle (7, 107) and a tubular member (8, 108), which tubular member (8, 108) is adapted to be coupled with the valve stem (51) of the aerosol container (50) and defines a flow channel between the valve stem (51) and the dispensing opening or nozzle (7, 107), the actuator (6, 106) being adapted to operate the valve stem (51),
- a push button (9, 109) associated with the actuator (6, 106), wherein a hinge portion (11, 111) integrally connects the push button (9, 109) with the cap body (2, 102), said hinge portion (11, 111) defining a hinge axis (12, 112),
wherein the hinge portion (11, 111) has a centre plane (13, 113) extending perpendicularly through the centre of the hinge axis (12, 112), wherein the aerosol cap (1, 101) has an injection gate (14, 114) in the push button (9, 109), and
wherein the circumferential wall (3, 103) of the cap body (2, 102) has one single rupture line (15, 115), wherein said rupture line (15, 115) extends from a top end (16, 116) of the cap body (2, 102) towards a bottom end (4, 104) of the cap body (2, 102), wherein said rupture line (15, 115) is at least partially offset from the centre plane (13, 113).

15. Assembly of an aerosol container (50) and an aerosol cap (1, 101) according to any of the claims 1-14.

## Patentansprüche

1. Aerosolkappe (1, 101) zum Aufsetzen auf einen Aerosolbehälter (50) mit einem Ventilschaft (51) eines betätigbaren Ventils an der Oberseite des Behälters (50), wobei die Aerosolkappe (1, 101) aus einem Kunststoffmaterial durch Spritzgießen hergestellt ist, wobei die Aerosolkappe (1, 101) Folgendes umfasst:
- einen Kappenkörper (2, 102) mit einer Umfangswand (3, 103) und mit einem offenen unteren Ende (4, 104), das auf den Aerosolbehälter (50) aufgesetzt und mit diesem verbunden werden soll,
- einen Aktuator (6, 106) mit einer Abgabeöffnung oder -düse (7, 107) und einem rohrförmigen Element (8, 108), wobei das rohrförmige Element (8, 108) dazu eingerichtet ist, mit dem Ventilschaft (51) des Aerosolbehälters (50) gekoppelt zu werden, und einen Strömungskanal zwischen dem Ventilschaft (51) und der Abgabeöffnung oder -düse (7, 107) definiert, wobei der Aktuator (6, 106) dazu eingerichtet ist, den Ventilschaft (51) zu betätigen,
- einen Druckknopf (9, 109), der dem Aktuator (6, 106) zugeordnet ist, wobei ein Scharnierabschnitt (11, 111) den Druckknopf (9, 109) integral mit dem Kappenkörper (2, 102) verbindet, wobei der Scharnierabschnitt (11, 111) eine Scharnierachse (12, 112) definiert,
wobei der Scharnierabschnitt (11, 111) eine Mittelebene (13, 113) aufweist, die sich senkrecht durch die Mitte der Scharnierachse (12, 112) erstreckt, wobei die Aerosolkappe (1, 101) in der Mittelebene (13, 113) einen Anspritzpunkt (14, 114) aufweist, und
wobei die Umfangswand (3, 103) des Kappenkörpers (2, 102) eine einzige Bruchlinie (15, 115) aufweist, wobei sich die Bruchlinie (15, 115) von einem oberen Ende (16, 116) des Kappenkörpers (2, 102) zu einem unteren Ende (4, 104) des Kappenkörpers (2, 102) erstreckt, wobei die Bruchlinie (15, 115) zumindest teilweise von der Mittelebene (13, 113) versetzt ist.

2. Aerosolkappe (1, 101) nach Anspruch 1, wobei sich der Anspritzpunkt (14, 114) im Druckknopf (9, 109) befindet.

3. Aerosolkappe (1, 101) nach Anspruch 1 oder 2, wobei sich die Bruchlinie (15, 115) von einer an den Scharnierabschnitt (11, 111) angrenzenden Stelle zum Rand der Umfangswand (3, 103) am unteren Ende hin erstreckt.

4. Aerosolkappe nach Anspruch 3, wobei das Ende der Bruchlinie (15, 115) am unteren Ende (4, 104) in oder nahe der Mittelebene (13, 113) liegt.

5. Aerosolkappe (1, 101) nach einem der vorhergehenden Ansprüche,
wobei die Bruchlinie (15, 115) eine gekrümmte Form aufweist; und/oder
wobei die Bruchlinie (15, 115) eine Kerbe (18) zur Bruchinitiierung am oberen Ende (16, 116) aufweist; und/oder
wobei die Bruchlinie (15, 115) dazu eingerichtet ist, am oberen Ende (16, 116) einen kleineren Reißwiderstand als am unteren Ende (4, 104) aufzuweisen.

6. Aerosolkappe (1, 101) nach einem der vorhergehenden Ansprüche, wobei die Bruchlinie (15, 115) Perforationen (20) umfasst,
wobei optional die Perforationen (20) eine ovale Form aufweisen, wobei eine Längsachse der ovalen Form entlang der Bruchlinie (15, 115) ausgerichtet ist,
wobei optional die Bruchlinie (15, 115) nur teilweise perforiert ist.

7. Aerosolkappe (1, 101) nach einem der vorhergehenden Ansprüche, wobei die Bruchlinie (15, 115) eine Nut umfasst.

8. Aerosolkappe (1, 101) nach Anspruch 7, wobei die Nut an der Außenseite der Umfangswand (3, 103) ausgebildet ist.

9. Aerosolkappe (1, 101) nach Anspruch 7, wobei die Nut an der Innenseite der Umfangswand (3, 103) ausgebildet ist.

10. Aerosolkappe nach Anspruch 9, wobei unmittelbar neben der Nut eine axiale Rippe (21, 121) an der Innenseite der Umfangswand (3, 103) ausgebildet ist.

11. Aerosolkappe (1, 101) nach einem der vorhergehenden Ansprüche, wobei sich auf jeder Seite der Bruchlinie (15, 115) eine axiale Rippe (21, 121) in einer Richtung vom oberen Ende (16, 116) zum unteren Ende (4, 104) entlang der Innenseite der Umfangswand (3, 103) erstreckt.

12. Aerosolkappe (1, 101) nach einem der vorhergehenden Ansprüche, wobei axiale Rippen (21, 121) an der Innenseite der Umfangswand (3, 103) über den Umfang verteilt ausgebildet sind, wobei sich die Rippen (21, 121) in axialer Richtung des Kappenkörpers (2, 102) erstrecken, wobei das untere Ende der Rippen (21, 121) vom unteren Ende (4, 104) der Umfangswand (3, 103) beabstandet ist.

13. Aerosolkappe (1, 101) zum Aufsetzen auf einen Aerosolbehälter (50) mit einem Ventilschaft (51) eines betätigbaren Ventils an der Oberseite des Behälters (50), wobei die Aerosolkappe (1, 101) aus einem Kunststoffmaterial, insbesondere PP oder PE, durch Spritzgießen hergestellt ist, wobei die Aerosolkappe (1, 101) Folgendes umfasst:
- einen Kappenkörper (2, 102) mit einer Umfangswand (3, 103) und mit einem offenen unteren Ende (4, 104), das auf den Aerosolbehälter (50) aufgesetzt und mit diesem verbunden werden soll,
- einen Aktuator (6, 106) mit einer Abgabeöffnung oder -düse (7, 107) und einem rohrförmigen Element (8, 108), wobei das rohrförmige Element (8, 108) dazu eingerichtet ist, mit dem Ventilschaft (51) des Aerosolbehälters (50) gekoppelt zu werden, und einen Strömungskanal zwischen dem Ventilschaft (51) und der Abgabeöffnung oder -düse (7, 107) definiert, wobei der Aktuator (6, 106) dazu eingerichtet ist, den Ventilschaft (51) zu betätigen,
- einen Druckknopf (9, 109), der dem Aktuator (6, 106) zugeordnet ist, wobei ein Scharnierabschnitt (11, 111) den Druckknopf (9, 109) integral mit dem Kappenkörper (2, 102) verbindet, wobei der Scharnierabschnitt (11, 111) eine Scharnierachse (12, 112) definiert,
wobei die Umfangswand (3, 103) des Kappenkörpers (2, 102) eine einzige Bruchlinie (15, 115) aufweist, wobei sich die Bruchlinie (15, 115) von einem oberen Ende (16, 116) des Kappenkörpers (2, 102) zu einem unteren Ende (4, 104) des Kappenkörpers (2, 102) erstreckt,
wobei sich auf jeder Seite der Bruchlinie (15, 115) eine axiale Rippe (21, 121) in einer Richtung vom oberen Ende (16, 116) zum unteren Ende (4, 104) entlang der Innenseite der Umfangswand (3, 103) erstreckt.

14. Aerosolkappe (1, 101) zum Aufsetzen auf einen Aerosolbehälter (50) mit einem Ventilschaft (51) eines betätigbaren Ventils an der Oberseite des Behälters (50), wobei die Aerosolkappe (1, 101) aus einem Kunststoffmaterial durch Spritzgießen hergestellt ist, wobei die Aerosolkappe (1, 101) Folgendes umfasst:
- einen Kappenkörper (2, 102) mit einer Umfangswand (3, 103) und mit einem offenen unteren Ende (4, 104), das auf den Aerosolbehälter (50) aufgesetzt und mit diesem verbunden werden soll,
- einen Aktuator (6, 106) mit einer Abgabeöffnung oder -düse (7, 107) und einem rohrförmigen Element (8, 108), wobei das rohrförmige Element (8, 108) dazu eingerichtet ist, mit dem Ventilschaft (51) des Aerosolbehälters (50) gekoppelt zu werden, und einen Strömungskanal zwischen dem Ventilschaft (51) und der Abgabeöffnung oder -düse (7, 107) definiert, wobei der Aktuator (6, 106) dazu eingerichtet ist, den Ventilschaft (51) zu betätigen,
- einen Druckknopf (9, 109), der dem Aktuator (6, 106) zugeordnet ist, wobei ein Scharnierabschnitt (11, 111) den Druckknopf (9, 109) integral mit dem Kappenkörper (2, 102) verbindet, wobei der Scharnierabschnitt (11, 111) eine Scharnierachse (12, 112) definiert,
wobei der Scharnierabschnitt (11, 111) eine Mittelebene (13, 113) aufweist, die sich senkrecht durch die Mitte der Scharnierachse (12, 112) erstreckt, wobei die Aerosolkappe (1, 101) einen Anspritzpunkt (14, 114) im Druckknopf (9, 109) aufweist, und
wobei die Umfangswand (3, 103) des Kappenkörpers (2, 102) eine einzige Bruchlinie (15, 115) aufweist, wobei sich die Bruchlinie (15, 115) von einem oberen Ende (16, 116) des Kappenkörpers (2, 102) zu einem unteren Ende (4, 104) des Kappenkörpers (2, 102) erstreckt, wobei die Bruchlinie (15, 115) zumindest teilweise von der Mittelebene (13, 113) versetzt ist.

15. Anordnung aus einem Aerosolbehälter (50) und einer Aerosolkappe (1, 101) nach einem der Ansprüche 1-14.

## Revendications

1. Capuchon d'aérosol (1, 101) destiné à être positionné sur un contenant d'aérosol (50) ayant une tige de soupape (51) d'une soupape actionnable, au niveau de la portion supérieure du contenant (50), le capuchon d'aérosol (1, 101) étant fait d'un matériau plastique par moulage par injection, le capuchon d'aérosol (1, 101) comprenant :
- un corps de capuchon (2, 102) ayant une paroi circonférentielle (3, 103) et ayant une extrémité inférieure ouverte (4, 104) destinée à être positionnée sur le contenant d'aérosol (50) et raccordée à celui-ci,
- un actionneur (6, 106) incluant une ouverture ou buse de distribution (7, 107) et un élément tubulaire (8, 108), lequel élément tubulaire (8, 108) est adapté pour être couplé à la tige de soupape (51) du contenant d'aérosol (50) et définit un canal d'écoulement entre la tige de soupape (51) et l'ouverture ou buse de distribution (7, 107), l'actionneur (6, 106) étant adapté pour actionner la tige de soupape (51),
- un bouton poussoir (9, 109) associé à l'actionneur (6, 106), dans lequel une partie d'articulation (11, 111) raccorde de façon monobloc le bouton poussoir (9, 109) au corps de capuchon (2, 102), ladite partie d'articulation (11, 111) définissant un axe d'articulation (12, 112),
dans lequel la partie d'articulation (11, 111) a un plan central (13, 113) s'étendant perpendiculairement à travers le centre de l'axe d'articulation (12, 112), dans lequel le capuchon d'aérosol (1, 101) a une entrée d'injection (14, 114) dans le plan central (13, 113), et
dans lequel la paroi circonférentielle (3, 103) du corps de capuchon (2, 102) a une ligne de rupture unique (15, 115), dans lequel ladite ligne de rupture (15, 115) s'étend depuis une extrémité supérieure (16, 116) du corps de capuchon (2, 102) vers une extrémité inférieure (4, 104) du corps de capuchon (2, 102), dans lequel ladite ligne de rupture (15, 115) est au moins partiellement décalée par rapport au plan central (13, 113).

2. Capuchon d'aérosol (1, 101) selon la revendication 1, dans lequel l'entrée d'injection (14, 114) est située dans le bouton poussoir (9, 109).

3. Capuchon d'aérosol (1, 101) selon la revendication 1 ou 2, dans lequel la ligne de rupture (15, 115) s'étend depuis un emplacement adjacent à la partie d'articulation (11, 111) vers le bord de la paroi circonférentielle (3, 103) à l'extrémité inférieure.

4. Capuchon d'aérosol selon la revendication 3, dans lequel the end de la ligne de rupture (15, 115) à l'extrémité inférieure (4, 104) est dans ou près du plan central (13, 113).

5. Capuchon d'aérosol (1, 101) selon de quelconques des revendications précédentes,
dans lequel la ligne de rupture (15, 115) a une forme courbée ; et/ou
dans lequel la ligne de rupture (15, 115) a une entaille d'amorce de rupture (18) à l'extrémité supérieure (16, 116) ; et/ou
dans lequel la ligne de rupture (15, 115) est adaptée pour avoir une résistance à la déchirure plus petite à l'extrémité supérieure (16, 116) qu'à l'extrémité inférieure (4, 104).

6. Capuchon d'aérosol (1, 101) selon de quelconques des revendications précédentes, dans lequel la ligne de rupture (15, 115) comprend des perforations (20),
dans lequel, facultativement, les perforations (20) ont une forme ovale avec un axe long de la forme ovale aligné avec la ligne de rupture (15, 115),
dans lequel, facultativement, la ligne de rupture (15, 115) est seulement partiellement perforée.

7. Capuchon d'aérosol (1, 101) selon de quelconques des revendications précédentes, dans lequel la ligne de rupture (15, 115) comprend une rainure.

8. Capuchon d'aérosol (1, 101) selon la revendication 7, dans lequel la rainure est formée sur le côté extérieur de la paroi circonférentielle (3, 103).

9. Capuchon d'aérosol (1, 101) selon la revendication 7, dans lequel la rainure est formée sur le côté intérieur de la paroi circonférentielle (3, 103).

10. Capuchon d'aérosol selon la revendication 9, dans lequel, directement à côté de la rainure, une nervure axiale (21, 121) est formée sur le côté intérieur de la paroi circonférentielle (3, 103).

11. Capuchon d'aérosol (1, 101) selon de quelconques des revendications précédentes, dans lequel, de chaque côté de la ligne de rupture (15, 115), une nervure axiale (21, 121) s'étend dans une direction depuis l'extrémité supérieure (16, 116) jusqu'à l'extrémité inférieure (4, 104) le long du côté intérieur de la paroi circonférentielle (3, 103).

12. Capuchon d'aérosol (1, 101) selon de quelconques des revendications précédentes, dans lequel des nervures axiales (21, 121) sont formées sur le côté intérieur de la paroi circonférentielle (3, 103), distribuées par-dessus la circonférence, dans lequel lesdites nervures (21, 121) s'étendent dans une direction axiale du corps de capuchon (2, 102), dans lequel l'extrémité inférieure des nervures (21, 121) est espacée de l'extrémité inférieure (4, 104) de la paroi circonférentielle (3, 103).

13. Capuchon d'aérosol (1, 101) destiné à être positionné sur un contenant d'aérosol (50) ayant une tige de soupape (51) d'une soupape actionnable, au niveau de la portion supérieure du contenant (50), le capuchon d'aérosol (1, 101) étant fait d'un matériau plastique, en particulier de PP ou de PE, par moulage par injection, le capuchon d'aérosol (1, 101) comprenant :
- un corps de capuchon (2, 102) ayant une paroi circonférentielle (3, 103) et ayant une extrémité inférieure ouverte (4, 104) destinée à être positionnée sur le contenant d'aérosol (50) et raccordée à celui-ci,
- un actionneur (6, 106) incluant une ouverture ou buse de distribution (7, 107) et un élément tubulaire (8, 108), lequel élément tubulaire (8, 108) est adapté pour être couplé à la tige de soupape (51) du contenant d'aérosol (50) et définit un canal d'écoulement entre la tige de soupape (51) et l'ouverture ou buse de distribution (7, 107), l'actionneur (6, 106) étant adapté pour actionner la tige de soupape (51),
- un bouton poussoir (9, 109) associé à l'actionneur (6, 106), dans lequel une partie d'articulation (11, 111) raccorde de façon monobloc le bouton poussoir (9, 109) au corps de capuchon (2, 102), ladite partie d'articulation (11, 111) définissant un axe d'articulation (12, 112),
dans lequel la paroi circonférentielle (3, 103) du corps de capuchon (2, 102) a une ligne de rupture unique (15, 115), dans lequel ladite ligne de rupture (15, 115) s'étend depuis une extrémité supérieure (16, 116) du corps de capuchon (2, 102) vers une extrémité inférieure (4, 104) du corps de capuchon (2, 102),
dans lequel, de chaque côté de la ligne de rupture (15, 115), une nervure axiale (21, 121) s'étend dans une direction depuis l'extrémité supérieure (16, 116) jusqu'à l'extrémité inférieure (4, 104) le long du côté intérieur de la paroi circonférentielle (3, 103).

14. Capuchon d'aérosol (1, 101) destiné à être positionné sur un contenant d'aérosol (50) ayant une tige de soupape (51) d'une soupape actionnable, au niveau de la portion supérieure du contenant (50), le capuchon d'aérosol (1, 101) étant fait d'un matériau plastique par moulage par injection, le capuchon d'aérosol (1, 101) comprenant :
- un corps de capuchon (2, 102) ayant une paroi circonférentielle (3, 103) et ayant une extrémité inférieure ouverte (4, 104) destinée à être positionnée sur le contenant d'aérosol (50) et raccordée à celui-ci,
- un actionneur (6, 106) incluant une ouverture ou buse de distribution (7, 107) et un élément tubulaire (8, 108), lequel élément tubulaire (8, 108) est adapté pour être couplé à la tige de soupape (51) du contenant d'aérosol (50) et définit un canal d'écoulement entre la tige de soupape (51) et l'ouverture ou buse de distribution (7, 107), l'actionneur (6, 106) étant adapté pour actionner la tige de soupape (51),
- un bouton poussoir (9, 109) associé à l'actionneur (6, 106), dans lequel une partie d'articulation (11, 111) raccorde de façon monobloc le bouton poussoir (9, 109) au corps de capuchon (2, 102), ladite partie d'articulation (11, 111) définissant un axe d'articulation (12, 112),
dans lequel la partie d'articulation (11, 111) a un plan central (13, 113) s'étendant perpendiculairement à travers le centre de l'axe d'articulation (12, 112), dans lequel le capuchon d'aérosol (1, 101) a une entrée d'injection (14, 114) dans le bouton poussoir (9, 109), et
dans lequel la paroi circonférentielle (3, 103) du corps de capuchon (2, 102) a une ligne de rupture unique (15, 115), dans lequel ladite ligne de rupture (15, 115) s'étend depuis une extrémité supérieure (16, 116) du corps de capuchon (2, 102) vers une extrémité inférieure (4, 104) du corps de capuchon (2, 102), dans lequel ladite ligne de rupture (15, 115) est au moins partiellement décalée par rapport au plan central (13, 113).

15. Ensemble d'un contenant d'aérosol (50) et d'un capuchon d'aérosol (1, 101) selon de quelconques des revendications 1 à 14.
